# EUROPÄISCHE PATENTSCHRIFT

(11) **EP 3 516 438 B1**
(45) Veröffentlichungstag und Bekanntmachung des Hinweises auf die Patenterteilung: **26.01.2022**
(21) Anmeldenummer: 17769069.0
(22) Anmeldetag: 19.09.2017
(51) Int. Cl.: G02B 6/38

(54) **STECKVERBINDER UND VERFAHREN ZUR VERRIEGELUNG UND/ODER ENTRIEGELUNG EINES STECKVERBINDERS**
CONNECTOR AND METHOD FOR LOCKING AND/OR UNLOCKING MECHANISM OF A CONNECTOR
CONNECTEUR ET PROCÉDÉ DE VERROUILLAGE ET DE DÉVERROUILLAGE D'UN CONNECTEUR

(30) Priorität: 22.09.2016 DE 102016117909
(43) Veröffentlichungstag der Anmeldung: 31.07.2019
(73) Patentinhaber: Reichle & De-Massari AG, 8620 Wetzikon (CH)
(72) Erfinder: ANDRES, Hans, 8340 Hinwil (CH)
(74) Vertreter: Daub, Thomas
(86) Internationale Anmeldenummer: PCT/EP2017/073629
(87) Internationale Veröffentlichungsnummer: WO 2018/054898

(56) Entgegenhaltungen:
- WO-A1-2016/039383
- US-A- 5 915 056
- US-A1- 2013 136 398
- US-A1- 2015 212 278

## Beschreibung

### Stand der Technik

Die Erfindung betrifft einen Steckverbinder nach dem Oberbegriff des Anspruchs 1.

Aus dem Stand der Technik sind MPO-Steckverbinder bekannt, mit einer Steckereinheit, einer translatorisch beweglichen Verriegelungseinheit und einem Kabelknickschutz, wobei eine Verriegelung und/oder Entriegelung der Steckereinheit mittels einer auf die Verriegelungseinheit ausgeübten translatorischen Zugkraft erfolgt.

Aus der WO 2012/151175 A2 ist ein Steckverbinder bekannt, mit einer Steckereinheit, welche zwei Steckerelemente aufweist, mit einer translatorisch unbeweglichen Verriegelungseinheit und einem Kabelknickschutz, welcher zur Betätigung der Verriegelungseinheit dient.

Ferner ist aus der US 9,146,351 B2 ein MPO-Steckverbinder bekannt, mit einer Steckereinheit, mit einer translatorisch beweglichen Verriegelungseinheit und einer Gehäuseeinheit, welcher zur Betätigung der Verriegelungseinheit dient. Die Gehäuseeinheit ist in diesem Fall jedoch nicht als Kabelknickschutz ausgebildet.

Darüber hinaus ist aus der US 9,239,437 B2 ein MPO-Steckverbinder mit einer Steckereinheit und mit einer translatorisch beweglichen Verriegelungseinheit bekannt, wobei eine Verriegelung und/oder Entriegelung der Steckereinheit mittels eines separaten an der Verriegelungseinheit befestigbaren Betätigungswerkzeugs erfolgt.

Weiterhin ist aus der US 2013/0136398 A1 ein Steckverbinder bekannt, welcher Ferrulen für optische Fasern aufweist, wobei die Ferrulen Führungsstifte und Federaufnahmen aufweisen.

Aus der US 5 915 056 A ist ein Steckverbinder bekannt, mit einem Kabelknickschutz, welcher einen Befestigungsbereich und einen spitz zulaufenden Bereich aufweist, wobei eine glatte Innenfläche des Kabelknickschutzes zu einem Ende des spitz zulaufenden Bereiches hin in einem Ausgang mündet.

Zudem sind aus der JP 2016/062089 A sowie aus der WO 2016/039383 A1 jeweils Steckverbinder bekannt, mit einem Innengehäuse welches ein Kupplungsloch zum Koppeln an einen optischen Adapter aufweist, wobei ein erstes und zweites Außengehäuse derart an dem Innengehäuse befestigt sind, dass das erste und zweite Außengehäuse in eine Vor- und Zurückrichtung bewegbar sind.

Des Weiteren ist aus der US 2015/0212278 A1 ein Steckverbinder bekannt, mit einem Grundkörper, an welchem eine Steckereinheit und ein Verriegelungselement angeordnet sind, mit einer Hülse, welche ein Betätigungselement zur Betätigung des Verriegelungselements aufweist und mit einem Kabelknickschutz, welcher teilweise innerhalb der Hülse angeordnet ist.

Schließlich ist aus der US 2012/0057826 A1 ein Steckverbinder bekannt, mit einem Gehäuse und einer Kupplung, wobei das Gehäuse in die Kupplung einführbar ist, mit einem Kupplungselement, welches an einer Rückseite des Gehäuses angeordnet ist und mit einem Kabelknickschutz, welcher eine optische Faser aufnimmt und sich von dem Kupplungselement rückwärts erstreckt.

Die Aufgabe der Erfindung besteht insbesondere darin, einen gattungsgemäßen Steckverbinder mit verbesserten Eigenschaften hinsichtlich einer Flexibilität bereitzustellen. Die Aufgabe wird durch das kennzeichnende Merkmal des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Steckverbinder, insbesondere einem optischen Steckverbinder, insbesondere zur Datenübertragung und/oder Telekommunikation, mit einer Steckereinheit, mit einer relativ zu der Steckereinheit translatorisch beweglichen und linear in Längserstreckungsrichtung der Steckereinheit verschiebbaren Verriegelungseinheit, welche in einem, insbesondere vollständig, gekoppelten und/oder montierten Zustand zur Verriegelung der Steckereinheit, vorteilhaft in einer zu der Steckereinheit korrespondierenden Steckbuchse, wie beispielsweise einem Adapter und/oder einer Kupplung vorgesehen ist, und mit einem Kabelknickschutz.

Es wird vorgeschlagen, dass der Kabelknickschutz, insbesondere zumindest im, insbesondere vollständig gekoppelten und/oder montierten Zustand, zu einer unmittelbaren, insbesondere direkten Betätigung, insbesondere einer Verriegelung, einer Entriegelung, einer Bewegung und/oder einer Auslösung der Verriegelungseinheit vorgesehen ist. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Längserstreckungsrichtung" eines Objekts soll insbesondere eine Richtung verstanden werden, welche parallel zu einer Richtung einer maximalen Erstreckung des Objekts verläuft.

Unter einem "Steckverbinder" soll in diesem Zusammenhang insbesondere zumindest ein Teil, insbesondere eine Unterbaugruppe, eines Steckverbindersystems verstanden werden. Vorteilhaft umfasst das Steckverbindersystem ferner wenigstens eine, insbesondere zu dem Steckverbinder korrespondierende Steckbuchse, mit welcher der Steckverbinder koppelbar ist. Der Steckverbinder kann dabei insbesondere als beliebiger magnetischer, elektrischer und/oder vorteilhaft optischer Steckverbinder ausgebildet sein, insbesondere als Einzel-, Simplex-, Dual-, Duplex-, Mehrfach- und/oder Multiplex-Steckverbinder. Besonders bevorzugt ist der Steckverbinder jedoch als MPO-Steckverbinder und/oder MTP-Steckverbinder ausgebildet. Unter einer "Steckereinheit" soll in diesem Zusammenhang insbesondere eine Einheit verstanden werden, welche zu einer Verbindung mit der Steckbuchse und vorteilhaft zu einem Einstecken in die Steckbuchse vorgesehen ist und dazu insbesondere zumindest ein, vorteilhaft genau ein, Steckerelement umfasst. Vorteilhaft ist die Steckereinheit dabei dazu vorgesehen, zumindest eine magnetische, elektrische und/oder vorteilhaft optische Verbindung zwischen zwei verschiedenen Objekten herzustellen und/oder zu ermöglichen.

Die Steckereinheit weist insbesondere ein Rastelement auf, welches insbesondere zu einer Kopplung mit einem weiteren Rastelement, insbesondere der Steckbuchse, vorgesehen ist. Das Rastelement ist vorzugsweise als eine Rastkante ausgebildet und besonders vorteilhaft zumindest im Wesentlichen unelastisch. Das weitere Rastelement ist vorzugsweise als ein zumindest im Wesentlichen elastischer Rastarm ausgebildet. Unter "zumindest im Wesentlichen" elastisch oder unelastisch soll insbesondere elastisch oder unelastisch im technischen Sinn, insbesondere bei einer makroskopischen Betrachtung, verstanden werden.

Ferner soll unter einer "Verriegelungseinheit" insbesondere eine, insbesondere separat und/oder getrennt von der Steckereinheit ausgebildete und vorteilhaft mit der Steckereinheit, insbesondere kraft- und/oder formschlüssig, gekoppelte und/oder, insbesondere kraft- und/oder formschlüssig, koppelbare Einheit verstanden werden, welche insbesondere zu einer, vorteilhaft direkten, Verriegelung der Steckereinheit in der Steckbuchse vorgesehen ist, insbesondere derart, dass ein Entfernen der Steckereinheit aus der Steckbuchse, insbesondere ohne Betätigung der Verriegelungseinheit, verhindert ist. Insbesondere ist die Verriegelungseinheit dabei zu einer Entriegelung und/oder Verriegelung der Steckereinheit, insbesondere in der Steckbuchse, relativ zu der Steckereinheit translatorisch von wenigstens einer ersten Position, insbesondere einer Verriegelungsposition, in wenigstens eine zweite Position, insbesondere eine Entriegelungsposition, und umgekehrt bewegbar und vorteilhaft verschiebbar. Zudem ist die Verriegelungseinheit besonders vorteilhaft federnd gelagert, insbesondere mittels wenigstens eines Federelements des Steckverbinders, und bewegt sich insbesondere ausgehend von der wenigstens einen zweiten Position automatisch in die erste Position zurück. Besonders bevorzugt umgreift die Verriegelungseinheit die Steckereinheit dabei zu wenigstens einem Großteil und besonders bevorzugt vollständig. Unter dem Ausdruck "zu wenigstens einem Großteil" sollen dabei insbesondere zumindest 55 %, vorteilhaft zumindest 65 %, vorzugsweise zumindest 75 %, besonders bevorzugt zumindest 85 % und besonders vorteilhaft zumindest 95 % verstanden werden.

Des Weiteren soll unter einem "Kabelknickschutz" insbesondere eine, insbesondere separat und/oder getrennt von der Steckereinheit und/oder der Verriegelungseinheit ausgebildete, Einheit verstanden werden, welche insbesondere dazu vorgesehen ist, wenigstens ein mit der Steckereinheit verbundenes Kabel aufzunehmen und insbesondere vor einer übermäßigen Beanspruchung, insbesondere einem Abknicken, einer übermäßigen Biegung und/oder einer Zugbeanspruchung, zu schützen. Der Kabelknickschutz weist dazu einen Kabelschutzabschnitt auf, welcher wenigstens eine Eintrittsöffnung für das Kabel und wenigstens eine, bevorzugt parallel zu der Eintrittsöffnung ausgerichtete, Austrittsöffnung für das Kabel aufweist. Vorzugsweise ist der Kabelknickschutz zudem zumindest teilweise und/oder zumindest abschnittsweise in eine zu der Längserstreckungsrichtung der Steckereinheit abweichende Richtung bewegbar. Insbesondere legt der Kabelknickschutz dabei einen minimalen Biegeradius für das wenigstens eine Kabel fest. Ferner steht der Kabelknickschutz insbesondere in Wirkverbindung mit der Verriegelungseinheit und kontaktiert die Verriegelungseinheit vorteilhaft unmittelbar. Bevorzugt weist der Kabelknickschutz dazu einen Betätigungsabschnitt auf. Der Kabelknickschutz weist somit insbesondere eine Doppelfunktion auf und ermöglicht einerseits einen effektiven Schutz, insbesondere Knickschutz, für das wenigstens eine Kabel und andererseits eine Verriegelung und/oder Entriegelung und hierdurch insbesondere ein Einstecken und/oder ein Ausstecken des Steckverbinders mittels einer auf den Kabelknickschutz ausgeübten Kraft. Durch diese Ausgestaltung kann ein Steckverbinder mit verbesserten Eigenschaften hinsichtlich einer Flexibilität bereitgestellt werden. Insbesondere kann dabei eine vorteilhafte Betätigung, insbesondere ein Einstecken und/oder Ausstecken, des Steckverbinders mittels des Kabelknickschutzes erreicht werden, insbesondere auch in sehr engen Umgebungen. Insbesondere kann auch in engen Räumen und/oder bei einer Vielzahl von nebeneinander angeordneten Steckverbindern ein vorteilhaft einfaches Einstecken und/oder Ausstecken eines Steckverbinders erreicht werden. Zudem kann ein Handling des Steckverbinders, insbesondere bei einem Einsteckvorgang und/oder einem Aussteckvorgang, vereinfacht werden. Darüber hinaus kann vorteilhaft eine Effizienz verbessert werden, insbesondere eine Bauraumeffizienz, eine Bauteileeffizienz, eine Fertigungseffizienz, eine Wartungseffizienz und/oder eine Kosteneffizienz.

Vorzugsweise ist der Kabelknickschutz translatorisch, insbesondere linear in Längserstreckungsrichtung der Steckereinheit, beweglich relativ zu der Steckereinheit, wodurch insbesondere ein Einsteckvorgang und/oder ein Aussteckvorgang vereinfacht werden kann. Vorteilhaft ist der Kabelknickschutz dabei frei von einer unmittelbaren Verbindung mit der Steckereinheit.

Ferner wird vorgeschlagen, dass der Kabelknickschutz beweglich, vorzugsweise translatorisch und besonders bevorzugt linear in Längserstreckungsrichtung der Steckereinheit beweglich, mit der Verriegelungseinheit verbunden ist. Vorteilhaft ist der Kabelknickschutz dabei kraft- und/oder formschlüssig mit der Verriegelungseinheit verbunden. Insbesondere kann der Kabelknickschutz zur Verbindung mit der Verriegelungseinheit zumindest ein Haltelement und die Verriegelungseinheit zumindest ein zu dem Haltelement korrespondierendes weiteres Haltelement umfassen. Das Haltelement des Kabelknickschutzes ist dabei vorteilhaft im Betätigungsabschnitt des Kabelknickschutzes angeordnet. Hierdurch kann insbesondere eine vorteilhafte Platzersparnis bei einer Betätigung der Verriegelungseinheit erreicht werden.

Darüber hinaus wird vorgeschlagen, dass der Kabelknickschutz dazu vorgesehen ist, eine, insbesondere durch einen Benutzer, auf den Kabelknickschutz ausgeübte, insbesondere translatorische, Kraft, insbesondere Druckkraft und/oder Zugkraft, insbesondere unmittelbar, auf die Verriegelungseinheit zu übertragen, um die Verriegelungseinheit zu betätigen, vorzugsweise zumindest eine Verriegelung zu lösen, und vorteilhaft gleichzeitig ein Entfernen des Steckverbinders, insbesondere mittels der auf den Kabelknickschutz ausgeübten, insbesondere translatorischen, Kraft, insbesondere Zugkraft, zu ermöglichen. Hierdurch kann insbesondere eine nahezu bauraumneutrale Ausgestaltung und gleichzeitig ein vorteilhaft benutzerfreundlicher Aussteckvorgang erreicht werden.

Insbesondere könnte die Verriegelungseinheit den Kabelknickschutz zumindest teilweise, vorzugsweise zu wenigstens einem Großteil und besonders bevorzugt vollständig, umgreifen. In einer vorteilhaften Ausgestaltung der Erfindung wird jedoch vorgeschlagen, dass der Kabelknickschutz die Verriegelungseinheit zumindest teilweise, vorzugsweise zu wenigstens einem Großteil und besonders bevorzugt vollständig, umgreift. Hierdurch kann insbesondere ein vorteilhaft robuster Steckverbinder bereitgestellt werden. Zudem kann vorteilhaft eine einfache Montage des Steckverbinders erreicht werden.

Ferner wird vorgeschlagen, dass der Kabelknickschutz zur unmittelbaren Betätigung der Verriegelungseinheit zumindest ein, vorzugsweise als Anschlagelement ausgebildetes Betätigungselement und bevorzugt zumindest zwei, vorteilhaft zumindest drei und besonders bevorzugt zumindest vier, vorzugsweise als Anschlagelemente ausgebildete, Betätigungselemente aufweist. Vorteilhaft kontaktiert das Betätigungselement und/oder kontaktieren die Betätigungselemente die Verriegelungseinheit dabei zumindest bei einem Einsteckvorgang und/oder einem Aussteckvorgang unmittelbar, insbesondere derart, dass eine auf den Kabelknickschutz ausgeübte, insbesondere translatorische Kraft, insbesondere Druckkraft und/oder Zugkraft, auf die Verriegelungseinheit übertragen wird. Das Betätigungselement ist und/oder die Betätigungselemente sind dabei vorteilhaft im Betätigungsabschnitt des Kabelknickschutzes angeordnet. Insbesondere kann zumindest eines der Betätigungselemente mit dem Haltelement zumindest teilweise identisch sein. Hierdurch kann insbesondere eine vorteilhafte Kraftübertragung von dem Kabelknickschutz auf das Verriegelungselement erreicht werden.

Der Kabelknickschutz ist einstückig ausgebildet. Unter "einstückig" soll in diesem Zusammenhang insbesondere zumindest stoffschlüssig verbunden und/oder miteinander ausgebildet verstanden werden. Der Stoffschluss kann beispielsweise durch einen Klebeprozess, einen Anspritzprozess, einen Schweißprozess, einen Lötprozess und/oder einen anderen Prozess hergestellt werden. Vorteilhaft soll unter einstückig aus einem Stück und/oder in einem Stück geformt verstanden werden. Vorzugsweise wird dieses eine Stück aus einem einzelnen Rohling, einer Masse und/oder einem Guss, wie beispielsweise in einem Extrusionsverfahren, insbesondere einem Ein- und/oder Mehrkomponenten-Extrusionsverfahren, und/oder einem Spritzgussverfahren, insbesondere einem Ein- und/oder Mehrkomponenten-Spritzgussverfahren, hergestellt. Hierdurch kann insbesondere ein vorteilhaft robuster Kabelknickschutz bereitgestellt werden. Zudem kann eine Komplexität des Knickschutzes, im Vergleich zu bekannten Lösungen, reduziert werden. Ferner kann insbesondere ein Herstellungsprozess vereinfacht werden.

Der Kabelknickschutz weist einen Betätigungsabschnitt, insbesondere den bereits zuvor genannten Betätigungsabschnitt, auf, welcher eine 2-zählige Drehsymmetrie, insbesondere bezüglich zumindest einer Drehsymmetrieachse, welche parallel zu der Längserstreckungsrichtung der Steckereinheit ist, besitzt. Unter einer "n-zähligen Drehsymmetrie" eines Objekts soll insbesondere verstanden werden, dass das Objekt n-mal um einen gleichen Drehwinkel, insbesondere kleiner 360°, insbesondere um die Drehsymmetrieachse, gedreht werden kann und bei jeder Drehung auf sich selbst abgebildet wird, wobei insbesondere nach n Drehungen ein Winkel von 360° erreicht und/oder überstrichen ist. Hierdurch kann insbesondere eine Herstellung und/oder Montage vereinfacht werden.

Eine besonders kompakte Ausgestaltung und/oder eine vorteilhaft hohe Schutzwirkung kann insbesondere erreicht werden, wenn der Kabelknickschutz einen Kabelschutzabschnitt, insbesondere den bereits zuvor genannten Kabelschutzabschnitt, aufweist, welcher zumindest abschnittsweise rotationssymmetrisch ist, vorteilhaft bezüglich der Längserstreckungsrichtung der Steckereinheit.

In einer weiteren Ausgestaltung der Erfindung wird vorgeschlagen, dass der Kabelknickschutz zumindest teilweise, vorzugsweise zu wenigstens einem Großteil und besonders bevorzugt vollständig, flexibel und vorteilhaft elastisch ausgebildet ist. In diesem Zusammenhang soll unter einem "flexiblen Objekt" insbesondere ein Objekt verstanden werden, das zumindest einen Teilbereich und/oder zumindest einen Teil aufweist, der in einem normalen Betriebszustand zumindest in seiner Position um zumindest 0,1 cm, vorzugsweise um zumindest 0,5 cm und besonders bevorzugt um zumindest 1 cm veränderbar ist. Insbesondere ist das flexible Objekt wiederholt, insbesondere beschädigungsfrei verformbar. Ferner soll unter einem "elastischen Objekt" insbesondere ein Objekt verstanden werden, das zumindest einen Teilbereich und/oder zumindest einen Teil aufweist, der in einem normalen Betriebszustand zumindest in seiner Position um zumindest 0,1 cm, vorzugsweise um zumindest 0,5 cm und besonders bevorzugt um zumindest 1 cm, elastisch veränderbar ist, und das insbesondere eine von einer Veränderung der Position abhängige und vorzugsweise zu der Veränderung proportionale Gegenkraft erzeugt, die insbesondere der Veränderung entgegen wirkt. Insbesondere ist das elastische Objekt wiederholt, insbesondere beschädigungsfrei, verformbar und strebt insbesondere nach einer Verformung selbstständig wieder einer Grundform zu. Insbesondere besteht der Kabelknickschutz in diesem Fall zumindest teilweise, vorzugsweise zu wenigstens einem Großteil und besonders bevorzugt vollständig, aus einem flexiblen und bevorzugt elastischen Material. Das flexible und vorteilhaft elastische Material kann dabei insbesondere ein Silikon, ein Elastomer, ein Thermoplast, ein Gummi, ein gummiähnliches Material und/oder ein beliebiger anderer Kunststoff mit entsprechenden Eigenschaften sein. Hierdurch kann insbesondere eine vorteilhafte Flexibilität des Kabelknickschutzes erreicht werden.

Vorzugsweise weist der Kabelknickschutz einen minimalen Biegeradius von zumindest 10 mm, vorteilhaft von zumindest 15 mm und besonders bevorzugt von zumindest 20 mm, auf. Vorteilhaft liegt der minimale Biegeradius zwischen 10 mm und 100 mm. Besonders vorteilhaft ist ein minimaler Biegeradius des Kabelknickschutzes derart bemessen, dass ein Dämpfungsanstieg des wenigstens einen Kabels höchstens 0,2 dB beträgt. Hierdurch kann eine Beschädigung von mit der Steckereinheit verbundenen Kabeln vorteilhaft verhindert werden.

Der Kabelknickschutz könnte beispielsweise einem vollständig geschlossenen Körper entsprechen und aus einem entsprechend weichen und/oder flexiblen Material, insbesondere einem Thermoplast, bestehen. Insbesondere, um eine Schutzwirkung des Kabelknickschutzes zu verbessern, wird jedoch vorgeschlagen, dass der Kabelknickschutz zumindest eine Biegeausnehmung aufweist, welche dazu vorgesehen ist, eine Steifigkeit, insbesondere Biegesteifigkeit, des Kabelknickschutzes zu verändern, insbesondere zu reduzieren. Vorteilhaft weist der Kabelknickschutz dabei eine Mehrzahl, wie beispielsweise zumindest zwei, zumindest vier und/oder zumindest sechs, Biegeausnehmungen auf.

Vorteilhaft wird in einem Verfahren zur Verriegelung und/oder Entriegelung eines Steckverbinders, insbesondere einem optischen Steckverbinder, insbesondere zur Datenübertragung und/oder Telekommunikation, wobei der Steckverbinder eine Steckereinheit, eine relativ zu der Steckereinheit translatorisch bewegliche, insbesondere linear in Längserstreckungsrichtung der Steckereinheit verschiebbare, Verriegelungseinheit, welche in einem, insbesondere vollständig, gekoppelten und/oder montierten Zustand zur Verriegelung der Steckereinheit, vorteilhaft in einer zu der Steckereinheit korrespondierenden Steckbuchse, wie beispielsweise einem Adapter und/oder einer Kupplung, vorgesehen ist, und einen Kabelknickschutz aufweist, die Verriegelungseinheit, insbesondere zumindest im, insbesondere vollständig, gekoppelten und/oder montierten Zustand, mittels des Kabelknickschutzes unmittelbar, insbesondere direkt betätigt, insbesondere verriegelt, entriegelt, bewegt und/oder ausgelöst. Hierdurch kann insbesondere eine Flexibilität verbessert werden. Insbesondere kann dabei eine vorteilhafte Betätigung, insbesondere ein Einstecken und/oder Ausstecken des Steckverbinders mittels des Kabelknickschutzes erreicht werden, insbesondere auch in sehr engen Umgebungen. Insbesondere kann auch in engen Räumen und/oder bei einer Vielzahl von nebeneinander angeordneten Steckverbindern ein vorteilhaft einfaches Einstecken und/oder Ausstecken eines Steckverbinders erreicht werden. Zudem kann ein Handling des Steckverbinders, insbesondere bei einem Einsteckvorgang und/oder einem Aussteckvorgang, vereinfacht werden. Darüber hinaus kann vorteilhaft eine Effizienz verbessert werden, insbesondere eine Bauraumeffizienz, eine Bauteileeffizienz, eine Fertigungseffizienz, eine Wartungseffizienz und/oder eine Kosteneffizienz.

Der Steckverbinder soll hierbei nicht auf die oben beschriebene Anwendung und Ausführungsform beschränkt sein. Insbesondere kann der Steckverbinder zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Steckverbindersystem mit einem beispielhaft als optischer Steckverbinder ausgebildeten Steckverbinder und einer zu dem Steckverbinder korrespondierenden Steckbuchse,
- Fig. 2: den Steckverbinder in einer ersten perspektivischen Ansicht,
- Fig. 3: den Steckverbinder in einer Explosionsdarstellung,
- Fig. 4: den Steckverbinder in einer Schnittdarstellung,
- Fig. 5: das Steckverbindersystem bei einem Einsteckvorgang des Steckverbinders in die Steckbuchse
- Fig. 6a-d: einen Ablauf des Einsteckvorgangs aus Figur 5,
- Fig. 7: das Steckverbindersystem bei einem Aussteckvorgang des Steckverbinders aus der Steckbuchse und
- Fig. 8a-d: einen Ablauf des Aussteckvorgangs aus Figur 7.

### Beschreibung des Ausführungsbeispiels

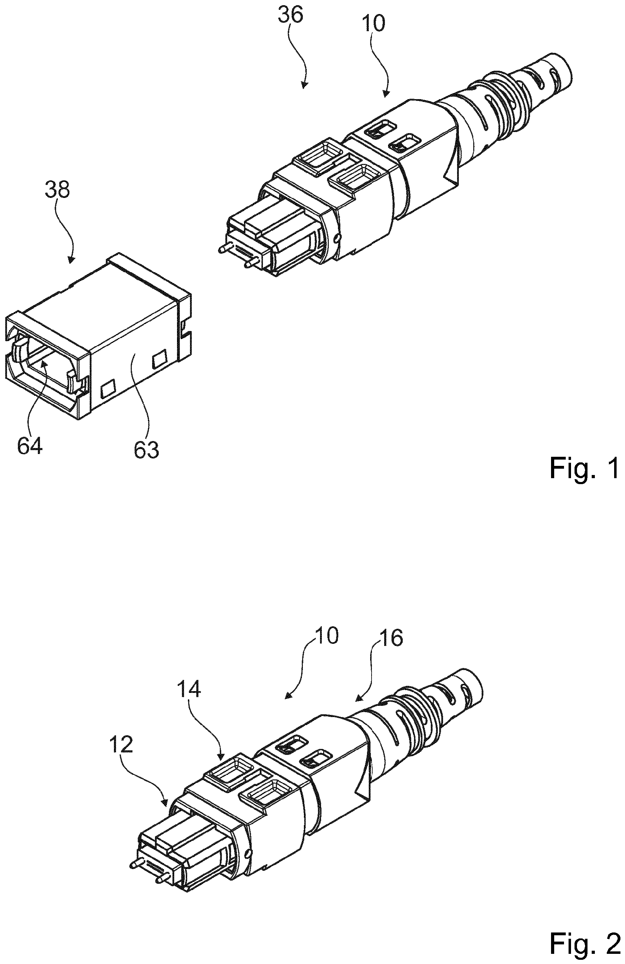

Figur 1 zeigt ein beispielhaftes Steckverbindersystem 36 mit einem beispielhaft als optischer Steckverbinder ausgebildeten Steckverbinder 10 und mit einer Steckbuchse 38. Der Steckverbinder 10 ist als Mehrfach- und/oder Multiplex-Steckverbinder ausgebildet. Der Steckverbinder 10 ist im vorliegenden Fall als MPO-Steckverbinder ausgebildet. Alternativ könnte ein Steckverbinder jedoch auch als elektrischer Steckverbinder oder dergleichen ausgebildet sein. Zudem könnte ein Steckverbinder prinzipiell auch als Simplex-Steckverbinder und/oder Duplex-Steckverbinder ausgebildet sein.

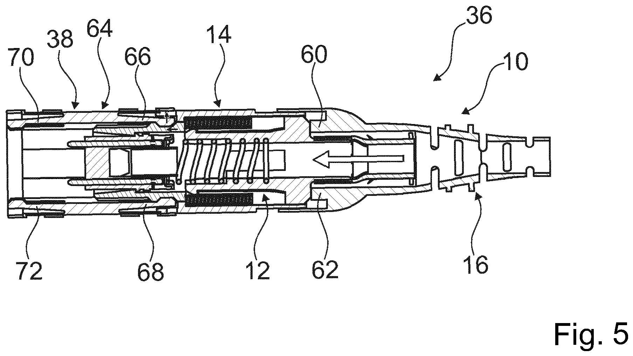

Der Steckverbinder 10 ist zu einer Kopplung mit der zu dem Steckverbinder 10 korrespondierenden Steckbuchse 38 vorgesehen (vgl. auch Figuren 5, 6a-d, 7 und 8a-d). Die Steckbuchse 38 ist im vorliegenden Fall als, insbesondere an sich bekannte, Kupplung ausgebildet. Die Steckbuchse 38 ist einstückig ausgebildet. Die Steckbuchse 38 ist zur Aufnahme und/oder Verbindung von zwei Steckverbindern 10 vorgesehen.

Dazu umfasst die Steckbuchse 38 einen Buchsengrundkörper 63. Der Buchsengrundkörper 63 ist zumindest im Wesentlichen quaderförmig ausgebildet. Ferner ist der Buchsengrundkörper 63 hohl ausgebildet.

Darüber hinaus umfasst die Steckbuchse 38 eine Rasteinheit 64. Die Rasteinheit 64 ist an einer Innenseite des Buchsengrundkörpers 63 angeordnet. Die Rasteinheit 64 umfasst vier Rastelemente 66, 68, 70, 72 (vgl. insbesondere auch Figur 5). Jeweils zwei der Rastelemente 66, 68, 70, 72 sind dabei einem der Steckverbinder 10 zugeordnet. Die Rastelemente 66, 68, 70, 72 sind ferner zumindest im Wesentlichen identisch zueinander ausgebildet. Die Rastelemente 66, 68, 70, 72 sind im vorliegenden Fall als Rastarme ausgebildet. Alternativ könnte eine Steckbuchse jedoch auch als von einer Kupplung abweichender Adapter und/oder Anschluss beispielsweise für eine Leiterplatte ausgebildet sein. Zudem könnte eine Rasteinheit auch eine andere Anzahl an Rastelementen aufweisen, wie beispielsweise zwei Rastelemente.

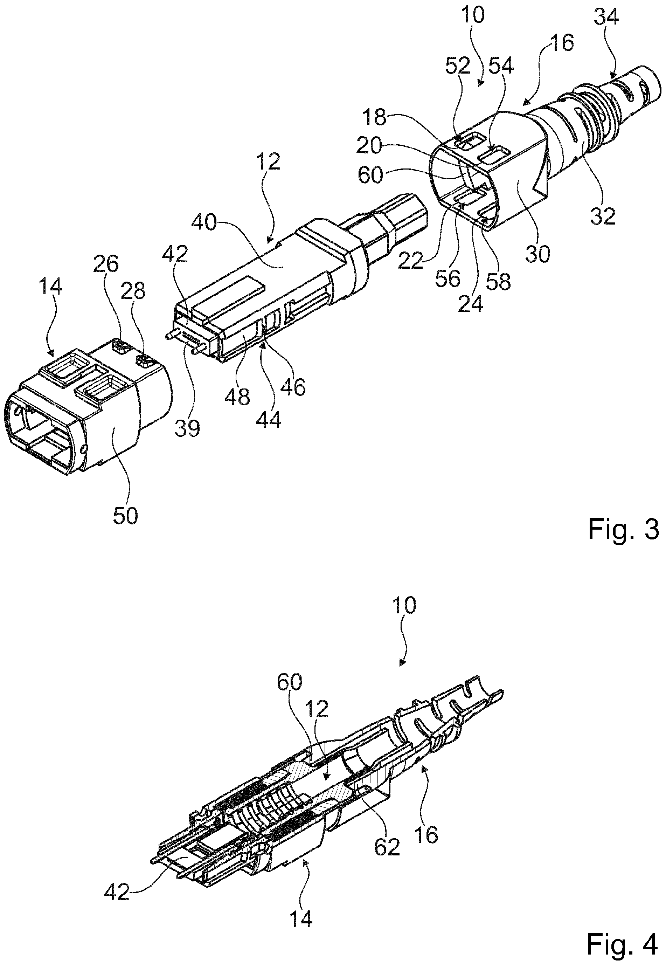

Die Figuren 2 bis 4 zeigen den Steckverbinder 10 in einer perspektivischen Ansicht (vgl. Figur 2), einer Explosionsdarstellung (vgl. Figur 3) und in einer Schnittdarstellung (vgl. Figur 4).

Der Steckverbinder 10 umfasst eine an sich bekannte Steckereinheit 12. Die Steckereinheit 12 ist länglich ausgebildet. Die Steckereinheit 12 definiert dabei eine Längserstreckungsrichtung des Steckverbinders 10. Die Steckereinheit 12 ist in einem montierten Zustand in die Steckbuchse 38 aufgenommen und/oder eingesteckt. Eine Kontaktseite und/oder eine im montierten Zustand der Steckbuchse 38 zugewandte Seite der Steckereinheit 12 definiert eine Frontseite 39 des Steckverbinders 10. Die Steckereinheit 12 ist dazu vorgesehen, eine optische Verbindung zwischen zwei Objekten herzustellen.

Die Steckereinheit 12 umfasst einen Steckergrundkörper 40. Der Steckergrundkörper 40 ist zumindest im Wesentlichen quaderförmig ausgebildet. Der Steckergrundkörper 40 ist als Aufnahmekörper ausgebildet. Der Steckergrundkörper 40 bildet zumindest teilweise ein Außengehäuse des Steckverbinders 10. Innerhalb des Steckergrundkörpers 40 ist wenigstens ein Großteil der für eine Funktion der Steckereinheit 12 benötigten Bauteile angeordnet.

Ferner umfasst die Steckereinheit 12 zumindest ein Steckerelement 42. Im vorliegenden Fall umfasst die Steckereinheit 12 genau ein Steckerelement 42. Grundsätzlich könnte eine Steckereinheit jedoch auch zwei Steckerelemente und/oder drei Steckerelemente aufweisen. Das Steckerelement 42 ist innerhalb des Steckergrundkörpers 40 gelagert. Das Steckerelement 42 ist als MPO-Steckerelement ausgebildet.

Darüber hinaus umfasst die Steckereinheit 12 eine weitere Rasteinheit 44. Die weitere Rasteinheit 44 ist an einer Außenseite des Steckergrundkörpers 40 angeordnet. Die weitere Rasteinheit 44 bildet in einem gekoppelten Zustand mit der Rasteinheit 64 der Steckbuchse 38 eine Rastverbindung aus.

Dazu umfasst die weitere Rasteinheit 44 zwei weitere Rastelemente 46, wobei in Figur 2 lediglich eines der weiteren Rastelemente 46 dargestellt ist. Die weiteren Rastelemente 46 sind zumindest im Wesentlichen identisch zueinander ausgebildet. Die weiteren Rastelemente 46 sind an sich gegenüberliegenden Seitenflächen des Steckergrundkörpers 40 angeordnet. Die weiteren Rastelemente 46 sind korrespondierend zu den Rastelementen 66, 68, 70, 72, insbesondere den dem Steckverbinder 10 zugeordneten Rastelementen 66, 68, 70, 72, ausgebildet. Die weiteren Rastelemente 46 sind im vorliegenden Fall als Rastkanten ausgebildet.

Zudem umfasst die weitere Rasteinheit 44 zwei Rastführungen 48, wobei in Figur 2 lediglich eine der Rastführungen 48 dargestellt ist. Die Rastführungen 48 sind zumindest im Wesentlichen identisch zueinander ausgebildet. Die Rastführungen 48 sind an sich gegenüberliegenden Seitenflächen des Steckergrundkörpers 40 angeordnet. Die Rastführungen 48 sind im vorliegenden Fall als Vertiefungen im Steckergrundkörper 40 ausgebildet. Die Rastführungen 48 schließen dabei unmittelbar an die weiteren Rastelemente 46 an. Die Rastführungen 48 dienen bei einem Koppelvorgang zur Führung der Rastelemente 66, 68, 70, 72, insbesondere den dem Steckverbinder 10 zugeordneten Rastelementen 66, 68, 70, 72. Alternativ könnte eine weitere Rasteinheit jedoch auch eine andere Anzahl an weiteren Rastelementen und/oder Rastführungen aufweisen, wie beispielsweise zumindest vier weitere Rastelemente und/oder Rastführungen. Zudem ist prinzipiell auch denkbar, auf Rastführungen zu verzichten.

Darüber hinaus umfasst der Steckverbinder 10 eine Verriegelungseinheit 14. Die Verriegelungseinheit 14 ist separat und/oder getrennt von der Steckereinheit 12 ausgebildet.

Die Verriegelungseinheit 14 ist einstückig ausgebildet. Alternativ könnte eine Verriegelungseinheit jedoch auch mehrteilig ausgebildet sein. Die Verriegelungseinheit 14 bildet zumindest teilweise ein Außengehäuse des Steckverbinders 10. Die Verriegelungseinheit 14 umfasst einen Verriegelungsgrundkörper 50. Der Verriegelungsgrundkörper 50 ist korrespondierend zu dem Steckergrundkörper 40 ausgebildet. Der Verriegelungsgrundkörper 50 ist im montierten Zustand kraft- und/oder formschlüssig mit dem Steckergrundkörper 40 gekoppelt. Im montierten Zustand umgreift der Verriegelungsgrundkörper 50 den Steckergrundkörper 40 vollständig.

Zudem umfasst die Verriegelungseinheit 14 zumindest ein Halteelement 26, 28. Im vorliegenden Fall umfasst die Verriegelungseinheit 14 vier Halteelemente 26, 28, wobei insbesondere in Figur 2 lediglich zwei der Halteelemente 26, 28 dargestellt sind. Die Halteelemente 26, 28 sind zumindest im Wesentlichen identisch zueinander. Die Halteelemente 26, 28 sind an einer Außenseite des Verriegelungsgrundkörpers 50 angeordnet. Die Halteelemente 26, 28 sind an, insbesondere parallel zu einer Haupterstreckungsebene der Verriegelungseinheit 14 ausgerichteten, Deckflächen des Verriegelungsgrundkörpers 50 angeordnet. Im vorliegenden Fall sind an jeder der Deckflächen zwei der Halteelemente 26, 28 angeordnet. Die Halteelemente 26, 28 sind an einer der Frontseite 39 abgewandten Seite des Verriegelungsgrundkörpers 50 angeordnet. Die Halteelemente 26, 28 sind als Haltevorsprünge ausgebildet. Alternativ könnte eine Verriegelungseinheit jedoch auch eine andere Anzahl an Halteelementen aufweisen, wie beispielsweise genau ein Halteelement, zwei Halteelemente und/oder sechs Halteelemente.

Die Verriegelungseinheit 14 ist ferner in einem vollständig gekoppelten Zustand und/oder montierten Zustand zur Verriegelung der Steckereinheit 12 in der Steckbuchse 38 vorgesehen, insbesondere derart, dass ein Entfernen der Steckereinheit 12 aus der Steckbuchse 38 ohne Betätigung der Verriegelungseinheit 14 verhindert ist.

Dazu ist die Verriegelungseinheit 14 beweglich relativ zu der Steckereinheit 12 gelagert. Die Verriegelungseinheit 14 ist relativ zu der Steckereinheit 12 translatorisch beweglich, im vorliegenden Fall insbesondere linear in Längserstreckungsrichtung der Steckereinheit 12 verschiebbar. Die Verriegelungseinheit 14 ist dabei von wenigstens einer ersten Position, insbesondere einer Verriegelungsposition, in wenigstens eine zweite Position, insbesondere eine Entriegelungsposition, und umgekehrt bewegbar. In der ersten Position umgreift der Verriegelungsgrundkörper 50 die weitere Rasteinheit 44 zu wenigstens einem Großteil und insbesondere die weiteren Rastelemente 46 der weiteren Rasteinheit 44 vollständig. In der ersten Position ist ein Entfernen der Steckereinheit 12 aus der Steckbuchse 38 blockiert und/oder verhindert. In der zweiten Position, welche insbesondere auch in Figur 1 dargestellt ist, ist die weitere Rasteinheit 44 hingegen frei zugänglich. In der zweiten Position ist ein Entfernen der Steckereinheit 12 aus der Steckbuchse 38 möglich. Im vorliegenden Fall ist die Verriegelungseinheit 14 ferner federnd gelagert und bewegt sich nach einer Auslenkung insbesondere automatisch in die erste Position zurück. Im vollständig montierten Zustand und/oder gekoppelten Zustand ist die Verriegelungseinheit 14 dabei zwischen den dem Steckverbinder 10 zugeordneten Rastelementen 66, 68, 70, 72 und dem Buchsengrundkörper 63 angeordnet und blockiert hierdurch ein Auslösen der Rastelemente 66, 68, 70, 72.

Des Weiteren umfasst der Steckverbinder 10 einen Kabelknickschutz 16. Der Kabelknickschutz 16 ist flexibel ausgebildet. Der Kabelknickschutz 16 besteht aus einem Thermoplast. Der Kabelknickschutz 16 ist einstückig ausgebildet. Der Kabelknickschutz 16 ist separat und/oder getrennt von der Steckereinheit 12 ausgebildet. In einem montierten Zustand umgreift der Kabelknickschutz 16 die Steckereinheit 12 vollständig. Der Kabelknickschutz 16 ist dabei frei von einer unmittelbaren Verbindung mit der Steckereinheit 12. Demnach ist der Kabelknickschutz 16 translatorisch, insbesondere linear in Längserstreckungsrichtung der Steckereinheit 12, beweglich relativ zu der Steckereinheit 12. Der Kabelknickschutz 16 bildet zumindest teilweise ein Außengehäuse des Steckverbinders 10.

Der Kabelknickschutz 16 ist ferner separat und/oder getrennt von der Verriegelungseinheit 14 ausgebildet. Der Kabelknickschutz 16 ist an der Verriegelungseinheit 14 befestigbar.

Dazu weist der Kabelknickschutz 16 zumindest ein weiteres Halteelement 52, 54, 56, 58 auf. Im vorliegenden Fall weist der Kabelknickschutz 16 vier weitere Halteelemente 52, 54, 56, 58 auf, wobei insbesondere jedem der Halteelemente 26, 28 der Verriegelungseinheit 14 eines der weiteren Halteelemente 52, 54, 56, 58 zugeordnet ist. Eine Anzahl der weiteren Halteelemente 52, 54, 56, 58 ist dabei an eine Anzahl der Halteelemente 26, 28 angepasst. Die weiteren Halteelemente 52, 54, 56, 58 sind zumindest im Wesentlichen identisch zueinander. Die weiteren Halteelemente 52, 54, 56, 58 sind an, insbesondere parallel zu einer Haupterstreckungsebene des Kabelknickschutzes 16 ausgerichteten, weiteren Deckflächen des Kabelknickschutzes 16 angeordnet. Im vorliegenden Fall sind an jeder der weiteren Deckflächen zwei der weiteren Halteelemente 52, 54, 56, 58 angeordnet. Die weiteren Halteelemente 52, 54, 56, 58 sind an einer der Frontseite 39 zugewandten Seite des Kabelknickschutzes 16 angeordnet. Die weiteren Halteelemente 52, 54, 56, 58 sind zumindest teilweise korrespondierend zu den Halteelementen 26, 28 ausgebildet. Die weiteren Halteelemente 52, 54, 56, 58 sind als Halteausnehmungen ausgebildet. Alternativ könnte ein Kabelknickschutz jedoch auch eine andere Anzahl an weiteren Halteelementen aufweisen, wie beispielsweise genau ein weiteres Halteelement und/oder zwei weitere Halteelemente. Zudem könnte eine Anzahl von Halteelementen und weiteren Halteelementen verschieden voneinander sein. Ferner ist denkbar, weitere Halteelemente an einer Seitenfläche eines Kabelknickschutzes anzuordnen. Darüber hinaus ist auch denkbar, einen Kabelknickschutz einstückig mit einer Verriegelungseinheit auszubilden.

Im montierten Zustand umgreift der Kabelknickschutz 16 die Verriegelungseinheit 14 vollständig. Im vorliegenden Fall umgreifen die weiteren Halteelemente 52, 54, 56, 58 dabei die Halteelemente 26, 28 der Verriegelungseinheit 14 derart, dass der Kabelknickschutz 16 beweglich, im vorliegenden Fall insbesondere translatorisch linear in Längserstreckungsrichtung der Steckereinheit 12 beweglich, mit der Verriegelungseinheit 14 verbunden ist.

Ferner ist der Kabelknickschutz 16 dazu vorgesehen, wenigstens ein mit der Steckereinheit 12 verbundenes Kabel (nicht dargestellt) aufzunehmen und insbesondere vor einer übermäßigen Beanspruchung zu schützen.

Dazu weist der Kabelknickschutz 16 einen Kabelschutzabschnitt 32 auf. Der Kabelschutzabschnitt 32 entspricht einem der Frontseite 39 abgewandten Abschnitt des Kabelknickschutzes 16. Der Kabelschutzabschnitt 32 dient zu einer Führung des wenigstens einen Kabels. Der Kabelschutzabschnitt 32 ist zumindest abschnittsweise rotationsymmetrisch. Der Kabelschutzabschnitt 32 ist flexibel in eine zu der Längserstreckungsrichtung der Steckereinheit 12 abweichende Richtung bewegbar. Der Kabelschutzabschnitt 32 weist ferner mehrere Biegeausnehmungen 34 auf, welche zu einer Reduzierung einer Biegesteifigkeit dienen, wodurch der Kabelschutzabschnitt 32 insbesondere in alle Richtungen bis zu einem definierten und/oder definierbaren Radius beweglich ist und das wenigstens eine Kabel effektiv vor einem Knicken schützt. Der Kabelschutzabschnitt 32 legt dabei einen minimalen Biegeradius für das wenigstens eine Kabel fest. Im vorliegenden Fall beträgt ein minimaler Biegeradius zumindest 25 mm. Der Kabelknickschutz 16 erfüllt dabei den Standard EN 50377-15-1. Demnach beträgt eine maximale Zugkraft am Kabel wenigstens 2 N bei einer Zugrichtung zwischen -90° bis +90°.

Des Weiteren ist der Kabelknickschutz 16 zu einer mittelbaren Betätigung der Verriegelungseinheit 14, insbesondere bei einem Einsteckvorgang, vorgesehen. Im vorliegenden Fall ist der Kabelknickschutz 16 zumindest dazu vorgesehen, eine, insbesondere durch einen Benutzer, auf den Kabelknickschutz 16 ausgeübte translatorische Druckkraft unmittelbar auf die Steckereinheit 12 und hierdurch mittelbar über die Steckbuchse 38 auf die Verriegelungseinheit 14 zu übertragen, um die Verriegelungseinheit 14 zu betätigen und insbesondere eine kurzzeitige Entriegelung der Verriegelungseinheit 14, insbesondere bei einem Einsteckvorgang, zu erreichen.

Darüber hinaus ist der Kabelknickschutz 16 zu einer unmittelbaren Betätigung der Verriegelungseinheit 14, insbesondere bei einem Aussteckvorgang, vorgesehen. Im vorliegenden Fall ist der Kabelknickschutz 16 zumindest dazu vorgesehen, eine, insbesondere durch einen Benutzer, auf den Kabelknickschutz 16 ausgeübte translatorische Zugkraft unmittelbar auf die Verriegelungseinheit 14 zu übertragen, um die Verriegelungseinheit 14 zu betätigen und insbesondere eine Verriegelung der Verriegelungseinheit 14, insbesondere im gekoppelten Zustand des Steckverbinders 10 mit der Steckbuchse 38, zu lösen.

Dazu weist der Kabelknickschutz 16 einen Betätigungsabschnitt 30 auf. Der Betätigungsabschnitt 30 entspricht einem der Frontseite 39 zugewandten Abschnitt des Kabelknickschutzes 16. Der Betätigungsabschnitt 30 besitzt eine 2-zählige Drehsymmetrie bezüglich einer Drehsymmetrieachse, welche parallel zu der Längserstreckungsrichtung der Steckereinheit 12 ist.

Der Betätigungsabschnitt 30 umfasst zur unmittelbaren Betätigung der Steckereinheit 12 und/oder zur mittelbaren Betätigung der Verriegelungseinheit 14 zumindest ein erstes Betätigungselement 60, 62. Im vorliegenden Fall umfasst der Betätigungsabschnitt 30 zwei erste Betätigungselemente 60, 62. Die ersten Betätigungselemente 60, 62 sind innerhalb des Kabelknickschutzes 16 angeordnet. Die ersten Betätigungselemente 60, 62 sind als Anschlagelemente ausgebildet. Die ersten Betätigungselemente 60, 62 sind dazu vorgesehen, bei einem Einsteckvorgang eine translatorische Druckkraft unmittelbar auf die Steckereinheit 12 zu übertragen.

Der Betätigungsabschnitt 30 umfasst zur unmittelbaren Betätigung der Verriegelungseinheit 14 zumindest ein zweites Betätigungselement 18, 20, 22, 24. Im vorliegenden Fall umfasst der Betätigungsabschnitt 30 vier zweite Betätigungselemente 18, 20, 22, 24. Die zweiten Betätigungselemente 18, 20, 22, 24 sind als Anschlagelemente ausgebildet. Die zweiten Betätigungselemente 18, 20, 22, 24 sind zumindest teilweise identisch mit den weiteren Halteelementen 52, 54, 56, 58 ausgebildet. Die zweiten Betätigungselemente 18, 20, 22, 24 entsprechen im vorliegenden Fall einem der Frontseite 39 zugewandten Abschnitt und/oder einer der Frontseite 39 zugewandten Seite der weiteren Halteelemente 52, 54, 56, 58. Die zweiten Betätigungselemente 18, 20, 22, 24 sind dazu vorgesehen, bei einem Aussteckvorgang eine translatorische Zugkraft unmittelbar auf die Verriegelungseinheit 14 zu übertragen. Die zweiten Betätigungselemente 18, 20, 22, 24 wirken hierzu mit den Halteelementen 26, 28 der Verriegelungseinheit 14 zusammen.

Der Kabelknickschutz 16 erfüllt somit im vorliegenden Fall eine Doppelfunktion und ermöglicht einerseits einen effektiven Knickschutz und andererseits eine Verriegelung und/oder Entriegelung und hierdurch insbesondere ein Einstecken und/oder ein Ausstecken des Steckverbinders 10 mittels einer auf den Kabelknickschutz 16 ausgeübten Kraft. Hierdurch kann auch in engen Räumen und/oder bei einer Vielzahl von nebeneinander angeordneten Steckverbindern ein vorteilhaft einfaches Betätigen eines Steckverbinders erreicht werden.

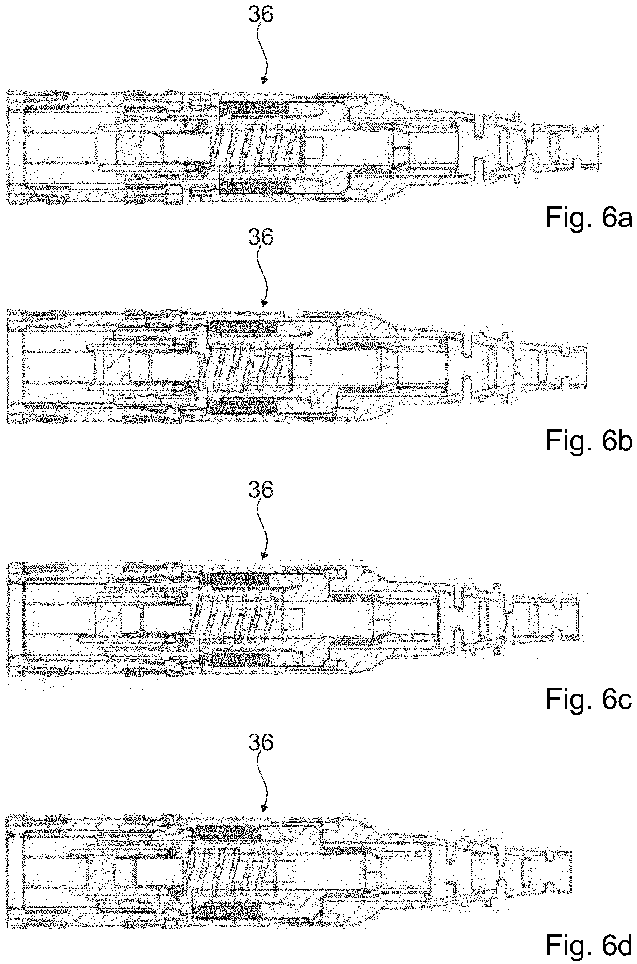

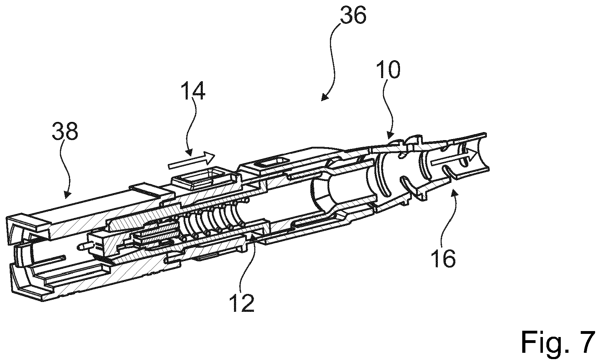

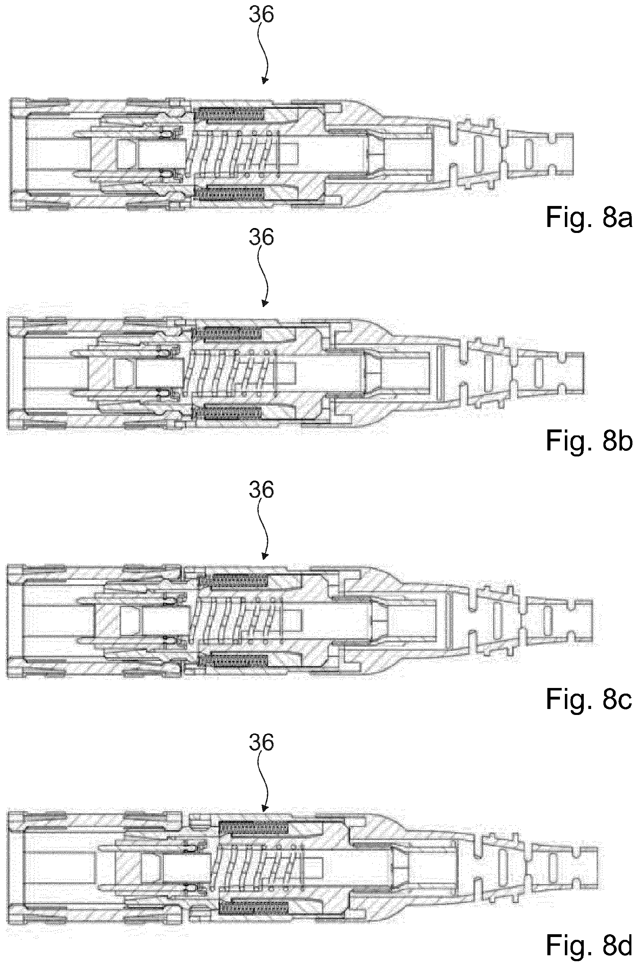

Die Figuren 5, 6a-d, 7 und 8a-d zeigen das Steckverbindersystem 36 bei einem Einsteckvorgang (vgl. Figuren 5 und 6a-d) und einem Aussteckvorgang (vgl. Figuren 7 und 8a-d).

Der Einsteckvorgang entspricht zumindest im Wesentlichen einem bekannten Einsteckvorgang. Dabei wird mittels der ersten Betätigungselemente 60, 62 eine, von einem Benutzer auf den Kabelknickschutz 16 ausgeübte, translatorische Druckkraft unmittelbar auf die Steckereinheit 12 übertragen. Hierdurch wird die Steckereinheit 12 in die Steckbuchse 38 eingeführt. Nachdem die Steckereinheit 12 um ein gewisses Maß eingeschoben wurde, stoßen die dem Steckverbinder 10 zugeordneten Rastelemente 66, 68, 70, 72 auf die weiteren Rastelemente 46. Hierdurch werden die dem Steckverbinder 10 zugeordneten Rastelemente 66, 68, 70, 72 ausgelenkt. Dabei verhindern die dem Steckverbinder 10 zugeordneten Rastelemente 66, 68, 70, 72 auch, dass die Verriegelungseinheit 14 in die erste Position, insbesondere die Verriegelungsposition, geschoben wird. Sind die dem Steckverbinder 10 zugeordneten Rastelemente 66, 68, 70, 72 hinter den Rastelementen 46 eingerastet, schiebt sich die Verriegelungseinheit 14 zwischen die dem Steckverbinder 10 zugeordneten Rastelemente 66, 68, 70, 72 und den Buchsengrundkörper 63 und verhindert so, dass die dem Steckverbinder 10 zugeordneten Rastelemente 66, 68, 70, 72 ausgelenkt werden können. Demzufolge ist ein Entfernen der Steckereinheit 12 aus der Steckbuchse 38 ohne Betätigung der Verriegelungseinheit 14 verhindert.

Da der Kabelknickschutz 16 hauptsächlich an der Verriegelungseinheit 14 befestigt und/oder geführt ist, wird beim Aussteckvorgang eine, von einem Benutzer auf den Kabelknickschutz 16 ausgeübte, translatorische Zugkraft mittels der zweiten Betätigungselemente 18, 20, 22, 24 unmittelbar auf die Verriegelungseinheit 14, insbesondere die Halteelemente 26, 28 der Verriegelungseinheit 14, übertragen. Hierdurch wird die Verriegelungseinheit 14 aus der ersten Position, insbesondere der Verriegelungsposition, in die zweite Position, insbesondere die Entriegelungsposition, bewegt, wodurch ein Auslösen der dem Steckverbinder 10 zugeordneten Rastelemente 66, 68, 70, 72 ermöglicht ist. Bei einer anhaltenden, insbesondere von einem Benutzer auf den Kabelknickschutz 16 ausgeübten, translatorischen Zugkraft werden die dem Steckverbinder 10 zugeordneten Rastelemente 66, 68, 70, 72 durch die weiteren Rastelemente 46 ausgelenkt und schieben sich wieder über die weiteren Rastelemente 46, insbesondere derart, dass ein Entfernen der Steckereinheit 12 aus der Steckbuchse 38 ermöglicht ist.

## Patentansprüche

1. Steckverbinder (10), insbesondere optischer Steckverbinder, mit einer Steckereinheit (12), mit einer relativ zu der Steckereinheit (12) translatorisch beweglichen und linear in Längserstreckungsrichtung der Steckereinheit (12) verschiebbaren Verriegelungseinheit (14), welche in einem gekoppelten Zustand zur Verriegelung der Steckereinheit (12) vorgesehen ist, und mit einem Kabelknickschutz (16), wobei der Kabelknickschutz (16) zu einer unmittelbaren Betätigung der Verriegelungseinheit (14) vorgesehen ist und einen Kabelschutzabschnitt (32) aufweist, welcher wenigstens eine Eintrittsöffnung für ein Kabel und wenigstens eine Austrittsöffnung für das Kabel aufweist, wobei der Kabelknickschutz (16) einen Betätigungsabschnitt (30) aufweist, welcher eine 2-zählige Drehsymmetrie besitzt, **dadurch gekennzeichnet, dass** der Kabelknickschutz (16) einstückig ausgebildet ist.

2. Steckverbinder (10) nach Anspruch 1, **dadurch gekennzeichnet, dass** der Kabelknickschutz (16) zumindest teilweise flexibel ausgebildet ist.

3. Steckverbinder (10) nach einem der vorhergehenden Ansprüche, **dadurch gekennzeichnet, dass** der Kabelknickschutz (16) translatorisch beweglich relativ zu der Steckereinheit (12) ist.

4. Steckverbinder (10) nach einem der vorhergehenden Ansprüche, **dadurch gekennzeichnet, dass** der Kabelknickschutz (16) beweglich mit der Verriegelungseinheit (14) verbunden ist.

5. Steckverbinder (10) nach einem der vorhergehenden Ansprüche, **dadurch gekennzeichnet, dass** der Kabelknickschutz (16) dazu vorgesehen ist, eine auf den Kabelknickschutz (16) ausgeübte Kraft auf die Verriegelungseinheit (14) zu übertragen, um die Verriegelungseinheit (14) zu betätigen.

6. Steckverbinder (10) nach einem der vorhergehenden Ansprüche, **dadurch gekennzeichnet, dass** der Kabelknickschutz (16) die Verriegelungseinheit (14) zumindest teilweise umgreift.

7. Steckverbinder (10) nach einem der vorhergehenden Ansprüche, **dadurch gekennzeichnet, dass** der Kabelknickschutz (16) zur unmittelbaren Betätigung der Verriegelungseinheit (14) zumindest ein Betätigungselement (18, 20, 22, 24) aufweist.

8. Steckverbinder (10) nach einem der vorhergehenden Ansprüche, **dadurch gekennzeichnet, dass** der Kabelknickschutz (16) einen Kabelschutzabschnitt (32) aufweist, welcher zumindest abschnittsweise rotationssymmetrisch ist.

9. Steckverbinder (10) nach einem der vorhergehenden Ansprüche, **dadurch gekennzeichnet, dass** der Kabelknickschutz (16) einen minimalen Biegeradius von zumindest 10 mm aufweist.

10. Steckverbindersystem (36) mit einem Steckverbinder (10) nach einem der vorhergehenden Ansprüche und mit einer mit dem Steckverbinder (10) koppelbaren Steckbuchse (38).

## Claims

1. Plug connector (10), in particular optical plug connector,
having a plug unit (12),
having a locking unit (14), which is translationally movable relative to the plug unit (12), which is linearly displaceable in a longitudinal extension direction of the plug unit (12), and which is in a coupled state configured for a locking of the plug unit (12),
and having a cable-kink protector (16),
wherein the cable kink protector (16) is configured for a direct actuation of the locking unit (14) and comprises a cable protection section (32) which has at least one entry opening for a cable and at least one exit opening for the cable, wherein the cable kink protector (16) comprises an actuation section (30) which has a two-fold rotational symmetry,
**characterised in that** the cable-kink protector (16) is implemented in one piece.

2. Plug connector (10) according to claim 1,
**characterised in that** the cable kink protector (16) is of at least partially flexible design.

3. Plug connector (10) according to one of the preceding claims, **characterised in that** the cable kink protector (16) is translationally movable relative to the plug unit (12).

4. Plug connector (10) according to one of the preceding claims, **characterised in that** the cable kink protector (16) is movably connected to the locking unit (14).

5. Plug connector (10) according to one of the preceding claims, **characterised in that** the cable kink protector (16) is configured, for an actuation of the locking unit (14), to transmit a force exerted onto the cable kink protector (16) to the locking unt (14).

6. Plug connector (10) according to one of the preceding claims, **characterised in that** the cable kink protector (16) engages at least partially around the locking unit (14).

7. Plug connector (10) according to one of the preceding claims, **characterised in that** for a direct actuation of the locking unit (14), the cable kink protector (16) comprises at least one actuation element (18, 20, 22, 24).

8. Plug connector (10) according to one of the preceding claims, **characterised in that** the cable kink protector (16) comprises a cable protection section (32), which is at least section-wise rotationally symmetrical.

9. Plug connector (10) according to one of the preceding claims, **characterised in that** the cable kink protector (16) has a minimum bending radius of at least 10 mm.

10. Plug connector system (36) with a plug connector (10) according to one of the preceding claims and with a plug socket (38) that is couplable with the plug connector (10).

## Revendications

1. Connecteur enfichable (10), en particulier connecteur enfichable optique,
avec une unité d'enfichage (12),
avec une unité de verrouillage (14) qui est translationnellement mobile par rapport à l'unité d'enfichage (12), qui est linéairement déplaçable en direction longitudinale de l'unité d'enfichage (12) et qui est en état couplé prévue pour un verrouillage de l'unité d'enfichage (12),
et avec une protection anti-pliage de câble (16),
où la protection anti-pliage de câble (16) est prévue pour un actionnement direct de l'unité de verrouillage (14) et comprend une section de protection de câble (32) ayant au moins une aperture d'entrée pour un câble et au moins une aperture de sortie pour le câble,
où la protection anti-pliage de câble (16) comprend une section d'actionnement (30) ayant une symétrie rotationnelle d'ordre 2,
**caractérisé en ce que** la protection anti-pliage de câble (16) est réalisée d'une pièce.

2. Connecteur enfichable (10) selon la revendication 1,
**caractérisé en ce que** la protection anti-pliage de câble (16) est réalisée d'une façon au moins partiellement flexible.

3. Connecteur enfichable (10) selon l'une des revendications précédentes, **caractérisé en ce que** la protection anti-pliage de câble (16) est translationnellement mobile par rapport à l'unité d'enfichage (12).

4. Connecteur enfichable (10) selon l'une des revendications précédentes, **caractérisé en ce que** la protection anti-pliage de câble (16) est raccordée à l'unité de verrouillage (14) d'une façon mobile.

5. Connecteur enfichable (10) selon l'une des revendications précédentes, **caractérisé en ce que** la protection anti-pliage de câble (16) est prévue à transférer une force exercée sur la protection anti-pliage de câble (16) à l'unité de verrouillage (14) pour un actionnement de l'unité de verrouillage (14).

6. Connecteur enfichable (10) selon l'une des revendications précédentes, **caractérisé en ce que** la protection anti-pliage de câble (16) entoure l'unité de verrouillage (14) au moins partiellement.

7. Connecteur enfichable (10) selon l'une des revendications précédentes, **caractérisé en ce que** pour un actionnement direct de l'unité de verrouillage (14) la protection anti-pliage de câble (16) comprend au moins un élément actionneur (18, 20, 22, 24).

8. Connecteur enfichable (10) selon l'une des revendications précédentes, **caractérisé en ce que** la protection anti-pliage de câble (16) comprend une section de protection de câble (32) qui est symétrique par rotation au moins en sections.

9. Connecteur enfichable (10) selon l'une des revendications précédentes, **caractérisé en ce que** la protection anti-pliage de câble (16) présente un rayon de courbure minimal d'au moins 10 mm.

10. Système à connecteur-enfichable (36) avec un connecteur enfichable (10) selon l'une des revendications précédentes et avec une prise femelle (38) qui peut être couplée avec le connecteur enfichable (10).
